# EUROPEAN PATENT SPECIFICATION

(11) **EP 3 565 758 B1**
(45) Date of publication and mention of the grant of the patent: **27.01.2021**
(21) Application number: 18704389.8
(22) Date of filing: 05.01.2018
(51) Int. Cl.: B62D 21/20, B60S 9/02, B62D 63/06, E04H 17/26

(54) **TRAILER**
ANHÄNGER
REMORQUE

(30) Priority: 06.01.2017 ZA 201700127
(43) Date of publication of application: 13.11.2019
(73) Proprietor: Cochrane Steel Products (Pty) Limited, 1619 Kempton Park (ZA)
(72) Inventor: SMITH, Ronald, Worcester Worcestershire WE1 2 JG (GB)
(74) Representative: Patentanwälte Ruff, Wilhelm, Beier, Dauster & Partner mbB
(86) International application number: PCT/ZA2018/050001
(87) International publication number: WO 2018/129567

(56) References cited:
- FR-A- 1 361 242
- US-A- 3 655 214

## Description

### BACKGROUND OF THE INVENTION

This invention relates to a trailer which includes a mobile barrier of the general kind described in the specification of US patent 8931998. Another trailer is known from US 3 655 214 A.

The aforementioned specification describes a custom-designed trailer from which coils of barbed tape, carried on a boom, can be deployed as the trailer is towed. After deployment the coils can be collected and stored in a compressed state on the boom.

A typical trailer can carry compressed coils of barbed tape with a combined mass of the order of 1000kg. The size of each coil can vary according to requirement. The coils, once fully deployed, can extend over a linear distance of the order of 150 metres. Depending on various factors the coils can be compressed into a number of modules e.g. two modules, each of which can be deployed to extend linearly for 75 metres, four modules, each of which can be deployed to extend linearly for 37.5 metres, or the like. This flexibility allows for the deployment of parts of the barrier at different locations.

When the trailer is towed at least one axle on which the trailer is supported should be positioned behind the centre of gravity of the trailer taking into account the direction of movement. This helps to prevent swaying of the trailer during movement. This requirement however can create a problem in that a substantial weight can be exerted by the trailer on its tow hitch and this weight is then transmitted to a towing vehicle. Care should thus be taken to ensure that the loading on the tow hitch does not exceed the manufacturer's specification, nor a legislative value.

If the configuration is such that a substantial down-weight is exerted on the tow hitch, the trailer can become difficult to manoeuvre manually and, during towing, the tow vehicle can have diminished steering traction on its front wheels.

A variety of factors can affect the location of the centre of gravity of the trailer. As indicated, the barrier can be compressed into a number of modules of different sizes and thus, as the modules are deployed, the centre of gravity on the trailer automatically changes. Also the collected modules which are stored on the boom do not always take up the same position. Another factor is that, during use of the trailer, the modules can move on the boom and this leads automatically to a displacement of the centre of gravity.

An object of the present invention is to provide a trailer which to a substantial extent allows the aforementioned problems to be addressed.

### SUMMARY OF THE INVENTION

The invention provides a trailer according to claim 1.

The first wheel pair may include a first axle, at least two wheels which are mounted to the first axle and first and second mounting arrangements for securing the first axle to the chassis.

Preferably the chassis includes a first elongate support on the first side and a second elongate support on the second side and the first and second mounting arrangements are respectively engageable with the first elongate support and the second elongate support.

The second wheel pair may have a construction which is substantially the same as the construction of the first wheel pair.

### BRIEF DESCRIPTION OF THE DRAWINGS

The invention is further described by way of example with reference to accompanying drawings in which:
Figure 1 is a side view of a trailer according to the invention,
Figure 2 is a view in perspective of the trailer of Figure 1, with wheels of the trailer removed,
Figure 3 is a perspective view of a chassis of the trailer;
Figure 4 is a plan view of the chassis,
Figure 5 is a view in perspective on an enlarged scale illustrating how a front wheel pair is adjustably mounted to the chassis; and
Figure 6 is similar to Figure 5 but illustrating the attachment of a rear wheel pair to the chassis.

### DESCRIPTION OF PREFERRED EMBODIMENT

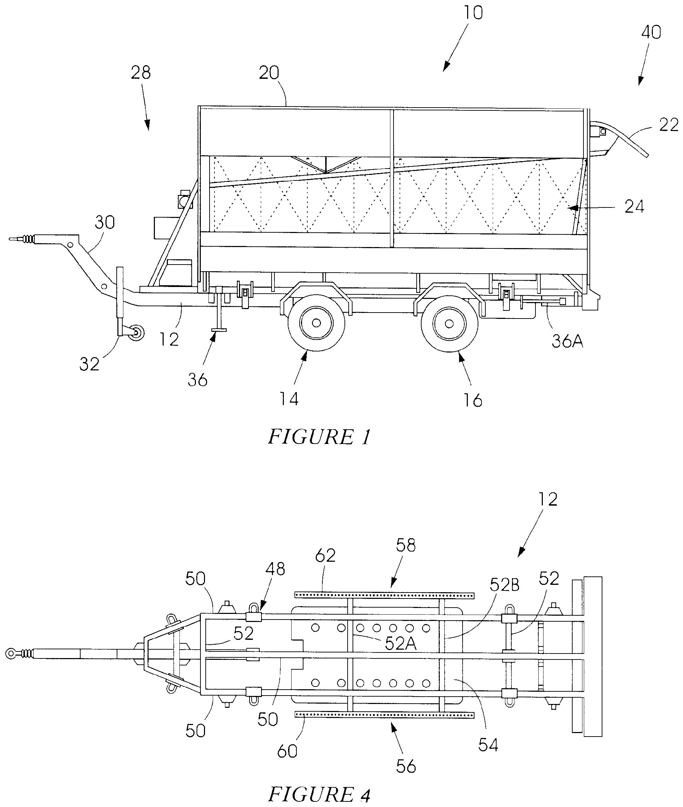

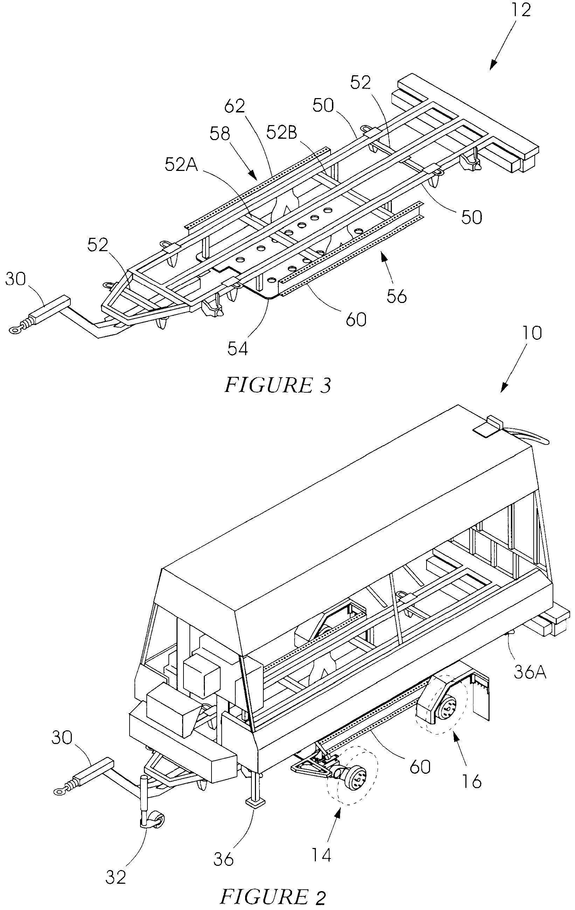

Figure 1 of the accompanying drawings illustrates from one side a trailer 10 according to the invention. Figure 2 shows the trailer 10 in perspective with certain components removed.

The trailer 10 includes a chassis 12 (see Figures 3 and 4) which is supported on a first ground-engaging wheel pair 14 and on a second ground-engaging wheel pair 16. Each wheel pair is secured to the chassis in a manner which is described hereinafter.

Mounted to the chassis is an upwardly extending enclosure 20 which effectively surrounds a deployment beam 22 on which a number of compressed coils 24 of barrier material e.g. barbed tape are positioned. The coils are notionally shown only. This type of structure is similar to that described in the specification of the USA patent.

The chassis 12 at a leading end 28 has a goose-neck 30. A jockey wheel 32 is fixed to the chassis 12 adjacent the goose-neck 30. Four jacks 36 are affixed to the chassis. Two jacks 36 are on one side of the chassis and two jacks are on an opposing side. In Figures 1 and 2 a jack 36, adjacent the first wheel pair 14, is shown in an extended configuration while a jack marked 36A, for identification purposes, adjacent a trailing end 40 of the trailer, is shown in a retracted mode.

Figure 3 is a perspective view of the chassis 12 while Figure 4 shows the chassis in plan. The chassis includes a supporting frame 48 with longitudinally extending elongate members 50, cross pieces 52 and a protective plate 54 which is on an underside the chassis.

The chassis 12 has opposed elongate first and second sides 56 and 58 respectively.

A first elongate support 60 is fixed to outer ends of two cross-pieces 52A and 52B, spaced from the first side 56. A second elongate support 62 is fixed to opposing ends of the cross-pieces 52A and 52B, spaced from the opposing second side 58.

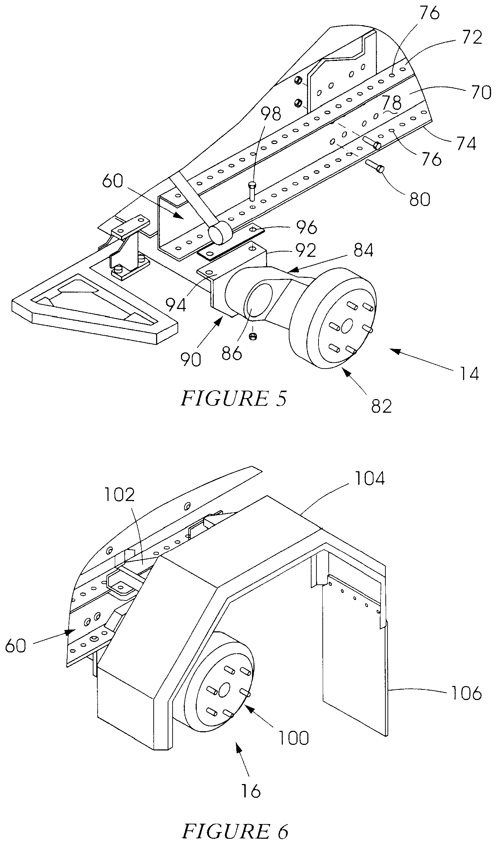

Figure 5 illustrates in perspective a portion of the first elongate support 60. The second elongate support 62 has a similar construction which is therefore not described herein. In this instance the support 60 is made from an elongate length of a channel member with a central web 70 and opposed upper and lower horizontally extending flanges 72 and 74 respectively. A plurality of holes 76 are formed in the flanges 72 and 74 at regular spaced intervals from one another. The web 70 is formed with holes 78. A plurality of bolts 80, which are passed through the holes 78, are used to secure the support 60 to the respective outer end of the cross-piece 52A and of the cross-piece 52B.

Figure 5 also illustrates a hub 82 of the first wheel pair 14. The hub 82 is supported on a torsionally restrained swing arm 84 which is mounted to an axle 86. At an opposing end, i.e. adjacent the side 58, the first wheel pair 14 has a similar construction.

The first wheel pair 14 includes a mounting arrangement 90 at a junction of the swing arm 84 and the axle 86. The mounting arrangement 90 includes a bracket 92 with a horizontally extending flange 94 which has holes 96 which are spaced so that they can be brought into register with corresponding holes 76 in the lower flange 74. The bracket 92 can then be attached to the support 62 by means of bolts 98 which are passed through registering holes in the flanges 94 and 74.

Figure 6 illustrates how the second wheel pair 16 is attached to the chassis 12. The construction is substantially similar to that adopted for securing the first wheel pair 14 to the chassis. A hub 100 of the second wheel pair 16 is mounted on an axle, which may be torsionally restrained (although this aspect is not illustrated) and the axle is fixed via an attachment arrangement 102 which is similar to the mounting arrangement 90, to the elongate support 60. A mudguard 104 which is attached to a mud flap 106 is, in use, positioned over a wheel, not shown, attached to the hub 100. The mudguard 104 is secured by means of fasteners (not shown) to the channel member 60.

Each wheel pair 14, 16 can respectively be engaged with the elongate supports 60 and 62 at any chosen location along the lengths of the supports 60, 62. This allows the positions of the wheel pairs to be adjusted relative to each other, taking into account the loading on the trailer. A considered assessment can be made of the mass of a load on the trailer and a decision can be made as to the approximate location of the trailer's centre of gravity. To substantial extent variations in the centre of gravity of the trailer with different loadings which arise from the deployment and subsequent collection of the coils 24 onto the boom 22 can be determined under factory conditions. A table can be drawn up which, with a fair degree of accuracy, allows for the positions of the wheel pairs to be adjusted according to the loading on the boom. The wheel pairs 14, 16 are then engaged with the supports 60, 62 so that the centre of gravity is between the two wheel pairs 14 and 16.

The jacks 36 are used, when required, to lift the trailer 10 so that the wheel pair 14 is free from the ground. The respective bolts 98 are loosened and the wheel pair 14 is then moved in a longitudinal direction along the supports 60 and 62 to a chosen location. A similar situation pertains in respect of the wheel pair 16 - in this instance the jacks 36A are used.

The fastenings between each wheel pair 14, 16 and the chassis 12 can be designed to be loosened and then to be re-engaged rapidly so that the positions of the wheel pairs relative to the chassis can be readily adjusted to take account of changing operating and loading conditions.

## Claims

1. A trailer (10) which includes a chassis (12) which has a leading end (28), a trailing end (40), opposed first and second sides (56,58), a first elongate support (60) on the first side (56) and a second elongate support (62) on the second side (58), a beam (22) which is mounted above the chassis (12) and which, in use, supports a variable number of compressed barrier coils (24) which affect a position of a centre of gravity of the trailer, a tow hitch structure (30) at the leading end (28), a first wheel pair (14), first and second mounting arrangements (90) for securing the first wheel pair (14) to the first and second elongate supports (30, 62) at a first location, a second wheel pair (16), and third and fourth mounting arrangements (90) for securing the second wheel pair (16) to the first and second elongate supports (60, 62) at a second location which is spaced from the first location, and wherein the position of the first location along the first and second elongate supports (60, 62) is variable and the position of the second location along the first and second elongate supports (60, 62) is variable so that the position of each of the wheel pairs (14,16) relative to the chassis (12) can be adjusted to take account of changing, operating and loading conditions.

2. A trailer (10) according to claim 1 wherein the first wheel pair (14) includes a first axle (86), at least two wheels which are mounted to the first axle (86) and first and second mounting arrangements (90) for securing the first axle (86) to the first and second elongate supports (60, 62).

3. A trailer (10) according to claim 1 which includes first jacks (36) which are fixed to the chassis (12) and which are operable to lift the first wheel pair (14) free from the ground so that the position of the first location can be adjusted, and second jacks (36A) which are fixed to the chassis (12) and which are operable to lift the second wheel pair (16) free from the ground so that the position of the second location can be adjusted.

## Patentansprüche

1. Anhänger (10), der ein Chassis (12) aufweist, mit einem Vorderende (28), einem Hinterende (40), gegenüberliegenden ersten und zweiten Seiten (56, 58), einem ersten langgestreckten Träger (60) auf der ersten Seite (56) und einem zweiten langgestreckten Träger (62) auf der zweiten Seite (58), einem Ausleger (22), der oberhalb des Chassis (12) angebracht ist und im Einsatz eine variable Anzahl an komprimierten Rollen von Absperrmaterial (24) trägt, die eine Position eines Schwerpunkts des Anhängers beeinflussen, einer Anhängerkupplung (30) am Vorderende (28), einem ersten Räderpaar (14), ersten und zweiten Montageanordnungen (90) zum Befestigen des ersten Räderpaars (14) am ersten und zweiten langgestreckten Träger (30, 62) in einer ersten Lage, einem zweites Räderpaar (16) sowie dritten und vierten Montageanordnungen (90) zum Befestigen des zweiten Räderpaars (16) am ersten und zweiten langgestreckten Träger (30, 62) in einer zweiten Lage, die von der ersten Lage beabstandet ist, und wobei die Position der ersten Lage entlang des ersten und zweiten langgestreckten Trägers (60, 62) veränderbar ist und die Position der zweiten Lage entlang des ersten und zweiten langgestreckten Trägers (60, 62) veränderbar ist, so dass die Position von jedem der Räderpaare (14, 16) relativ zum Chassis (12) unter Berücksichtigung von veränderten Betriebs- und Lastbedingungen eingestellt werden kann.

2. Anhänger (10) nach Anspruch 1, wobei das erste Räderpaar (14) eine erste Achse (86), mindestens zwei Räder, die auf der ersten Achse (86) montiert sind, sowie erste und zweite Montageanordnungen (90) zum Befestigen der ersten Achse (86) am ersten und zweiten langgestreckten Träger (60, 62) aufweist.

3. Anhänger (10) nach Anspruch 1, der erste Heber (36) aufweist, die am Chassis (12) festgelegt sind, und die dazu ausgebildet sind, das erste Räderpaar (14) vom Untergrund abzuheben, so dass die Position der ersten Lage eingestellt werden kann, und zweite Heber (36A) aufweist, die am Chassis (12) festgelegt sind, und die dazu ausgebildet sind, das zweite Räderpaar (16) vom Untergrund abzuheben, so dass die Position der zweiten Lage eingestellt werden kann.

## Revendications

1. Remorque (10) qui comprend un châssis (12) qui a une extrémité avant (28), une extrémité arrière (40), des premier et second côtés opposés (56, 58), un premier support allongé (60) sur le premier côté (56) et un second support allongé (62) sur le second côté (58), une flèche (22) qui est montée au-dessus du châssis (12) et qui, lors de l'utilisation, supporte un nombre variable de bobines barrières comprimées (24) qui affectent une position d'un centre de gravité de la remorque, une structure à crochet de remorquage (30) au niveau de l'extrémité avant (28), une première paire de roues (14), des premier et deuxième dispositifs de montage (90) pour fixer la première paire de roues (14) aux premier et second supports allongés (30, 62) au niveau d'un premier emplacement, une seconde paire de roues (16), et des troisième et quatrième dispositifs de montage (90) pour fixer la seconde paire de roues (16) aux premier et second supports allongés (60, 62) au niveau d'un second emplacement qui est espacé du premier emplacement, et la position du premier emplacement le long des premier et second supports allongés (60, 62) étant variable et la position du second emplacement le long des premier et second supports allongés (60, 62) étant variable de sorte que la position de chacune des paires de roues (14, 16) par rapport au châssis (12) puisse être ajustée pour tenir compte des conditions de fonctionnement et de chargement qui changent.

2. Remorque (10) selon la revendication 1, la première paire de roues (14) comprenant un premier essieu (86), au moins deux roues qui sont montées sur le premier essieu (86) et des premier et second dispositifs de montage (90) pour fixer le premier essieu (86) aux premier et second supports allongés (60, 62).

3. Remorque (10) selon la revendication 1, qui comprend des premiers vérins (36) qui sont fixés au châssis (12) et qui permettent de soulever la première paire de roues (14) du sol afin que la position du premier emplacement puisse être ajustée, et des seconds vérins (36A) qui sont fixés au châssis (12) et qui permettent de soulever la seconde paire de roues (16) du sol afin que la position du second emplacement puisse être ajustée.
